Europäisches Patentamt
European Patent Office
Office européen des brevets

(11) Veröffentlichungsnummer: **0 417 403 A1**

(12) **EUROPÄISCHE PATENTANMELDUNG**


(21) Anmeldenummer: **90111182.3**

(51) Int. Cl.5: **A01D 41/12**, A01F 12/44

(22) Anmeldetag: **13.06.90**

(30) Priorität: **15.09.89 DE 3930949**

(43) Veröffentlichungstag der Anmeldung: **20.03.91 Patentblatt 91/12**

(84) Benannte Vertragsstaaten: **AT BE CH DE DK ES FR GB GR IT LI LU NL SE**



(71) Anmelder: **Klöckner-Humboldt-Deutz Aktiengesellschaft**
**Deutz-Mülheimer-Strasse 111 Postfach 80 05 09**
**W-5000 Köln 80(DE)**

(72) Erfinder: **Hönl, Josef**
**Paul-Böhm Strasse 26**
**W-8882 Lauingen(DE)**
Erfinder: **Schmittbetz, Klaus**
**Bruckwörthweg 25**
**W-8884 Höchstadt(DE)**

(74) Vertreter: **Haft, Berngruber, Czybulka**
**Postfach 14 02 46 Hans-Sachs-Strasse 5**
**W-8000 München 5(DE)**


(54) **Reinigungsvorrichtung.**


(57) Die Reinigungsvorrichtung für Mähdrescher, die sich an die Drescheinrichtung anschließt, besteht im wesentlichen aus einem Gebläse, einem Obersieb und einem Untersieb, wobei das Obersieb aus einem ersten Siebabschnitt besteht, an das sich, in Förderrichtung des Erntegutes gesehen, ein zweiter Siebabschnitt anschließt, der um eine in der Siebebene senkrecht zur Förderrichtung liegende Drehachse höhenverstellbar am ersten Siebabschnitt angelenkt ist.

4
1
Fig. 1
3
2


EP 0 417 403 A1

## REINIGUNGSVORRICHTUNG

Die vorliegende Erfindung betrifft eine Reinigungsvorrichtung für selbstfahrende Mähdrescher, die sich an die Drescheinrichtung anschließt und die im wesentlichen aus einem Gebläse, einem Obersieb und einem Untersieb besteht.

Bei einem derartigen Mähdrescher wird das geerntete Gut über die Zufuhrvorrichtung der Drescheinrichtung zugeführt, in der die Körner abgeschieden werden. Das ausgedroschene Stroh wird dann über einen Hordenschüttler und mehrere Steilstufen dem rückwärtigen Ende des Mähdreschers zugeführt. Die ausgedroschenen Körner sowie Spreu und nicht ausgedroschene Ähren gelangen von der Kornabscheidevorrichtung auf einen Vorbereitungsboden, von dem aus sie der Reinigungsvorrichtung zugeführt werden, die üblicherweise aus mehreren Sieben besteht. Vor der Reinigungsvorrichtung, die durch eine geeignete Schütteleinrichtung in Oszillationen versetzt werden kann, ist üblicherweise ein Gebläse angeordnet, um die Körner von der Spreu und sonstigen Verunreinigungen zu trennen, bevor die Spreu und der Kurzstrohanteil über das hintere Ende der Siebe hinaus weggeblasen wird.

Der Wirkungsgrad des Trennens von Spreu und Körnern ist umso höher, je regelmäßige das Erntegut der Anordnung zugeführt wird und je gleichmäßiger die Reinigungsluft die Siebe durchströmt.

Fährt nun ein derartiger Mähdrescher hangaufwärts, so daß sich die Siebe nicht mehr in der optimalen waagrechten Lage befinden, so kann ein Teil des vom Vorbereitungsboden dem Obersieb zugeführten Gutes auf Stellen des Obersiebes fallen, die (in Fahrtrichtung gesehen) weiter hinten liegen als die Vorderkante des Siebes. Dabei können erhebliche Siebverluste auftreten, da dann für die Körner zu wenig Zeit verbleibt, um auf dem relativ kurzen Siebabschnitt, den sie zurücklegen, ausreichend von der Spreu getrennt zu werden und durch die Sieböffnungen hindurchzufallen, so das ein relativ großer Kornanteil zusammen mit der Spreu und dem Kurzstrohanteil über das rückwärtige Ende des Obersiebs abgegeben wird.

Es ist bekannt, zur Verbesserung der Abscheidewirkung von Reinigungsvorrichtungen in Mähdreschern die Siebanordnung zu unterteilen. So beschreibt die DE-OS 38 04 348 eine Mehrebenen-Reinigungsvorrichtung für Mähdrescher, bei der das von einer Drescheinrichtung auf einen Stufenboden geförderte Korn-Kurzstroh-Spreu-Gemisch einer aus einem Druckwindgebläse und einem Ober- und Untersieb bestehenden Reinigungseinrichtung zur weiteren Korntrennung zugeführt wird und bei der das Obersieb aus mehreren einzelnen Teilsieben besteht, die versetzt zueinander in verschiedenen Ebenen angeordnet sind und jeweils zwischen dem Abgabebereich eines Teilsiebes bzw. dem Stufenboden und dem Aufgabebereich des folgenden Teilsiebes eine vom Luftstrom des Druckwindgebläses durchströmte Fallstufe angeordnet sind; dabei weisen die einzelnen Teilsiebe unterschiedliche Längen auf, die in Förderrichtung zunehmen, während die einzelnen Fallstufen unterschiedliche Höhen aufweisen, die sich in Förderrichtung verringern, wobei der Abstand der Fallstufen zueinander in Förderrichtung vergrößert wird.

Mit einer derartigen Ausgestaltung einer Reinigungsvorrichtung soll bei einem großen Erntegutdurchsatz mit einem erhöhten Spreu- und Kurzstrohanteil eine intensive Auflockerung und Durchströmung des Reinigungsgutes und damit eine verbesserte Körnerabscheidung erfolgen; eine derartige Ausgestaltung der Reinigungsvorrichtung läßt sich jedoch nur schwer an unterschiedliche Erntegüter anpassen und erfordert einen hohen baulichen Aufwand.

Aus der DE-OS 14 82 262 ist eine Vorrichtung zur Reinigung von Getreide in Dreschmaschinen bekannt, wobei das Obersieb aus zwei Abschnitten besteht, von denen ein vorderer Abschnitt mit einer Neigung nach unten und hinten aus der Ebene des Getreideschüttlers verläuft und ein hinterer Abschnitt im wesentlichen horizontal angeordnet ist. Ein vorderes Ende des hinteren Abschnitts liegt hinter einem und in der gleichen vertikalen Lage wie ein hinteres Ende des vorderen Abschnitts, dergestalt, daß zwischen den beiden Abschnitten ein horizontal verlaufender Spalt gebildet wird. Durch diesen Spalt wird ein Luftstrom geleitet, der so bemessen ist, daß das beim Passieren des vorderen Abschnitts vom leichteren Material abgeschiedene Körnergut durch den Spalt fällt, während das leichtere Material über den Spalt hinweg zum hinteren Abschnitt gefördert wird.

Hierbei tritt noch der Nachteil auf, daß bei einem zu starken Gebläsewind nicht nur die Spreu, sondern auch ein bestimmter Kornanteil auf den hinteren Siebabschnitt geblasen wird; ist jedoch der Gebläsewind zu schwach, so fallen nicht nur ausgedroschene Körner, sondern auch Spreu und Kurzstroh durch den Spalt zwischen den beiden Siebabschnitten.

Aus der DE-PS 37 20 696 ist schließlich eine Reinigungsvorrichtung für Mähdrescher bekannt, der das Erntegut von einem Hordenschüttler zugeführt wird und die aus einem Gebläse, einem Obersieb und einem Untersieb besteht. Das Obersieb ist dabei mit einer Siebverlängerung ausgestattet, die auf beiden Seiten je eine Durchlaßöffnung aufweist, wobei die Durchlaßöffnungen mittels Abdeckvorrichtungen zumindest teilweise verschließbar sind. Die Abdeckvorrichtungen bestehen aus zahlreichen nebeneinander angeordneten Zinken bzw. Fingern, die lösbar mit dem Sieb verbunden sind und die unter einem bestimmten Winkel zur Siebebene nach oben anstellbar sind. Damit soll bei der Arbeitsweise am Hang eine bessere Entmischung des Erntegutes gewährleistet werden, da bei Schrägstellung des Mähdreschers sich normalerweise an der hangabwärts liegenden Siebseite besonders viel Material anhäuft, das durch die im hinteren Bereich befindliche Durchlaßöffnung fallen kann, wobei die nach oben gerichteten Finger bzw. Zinken eine erste Entmischung zwischen den groben Strohteilen und dem Korn-Spreu-Gemisch bewirken.

Aufgabe der vorliegenden Erfindung ist es, eine Reinigungsvorrichtung für selbstfahrende Mähdrescher zu schaffen, die auf besonders einfache Art und Weise einen hohen Kornabscheidegrad ermöglicht.

Ausgehend von einer Reinigungsvorrichtung der eingangs näher genannten Art wird zur Lösung dieser Aufgabe vorgeschlagen, daß das Obersieb aus einem ersten Siebabschnitt besteht, an das, in Förderrichtung des Erntegutes gesehen, sich ein zweiter Siebabschnitt anschließt, der um eine in der Siebebene senkrecht zur Förderrichtung liegende Drehachse höhenverstellbar am ersten Siebabschnitt angelenkt ist.

Vorzugsweise ist der zweite Siebabschnitt mit einer elektrisch, hydraulisch oder mechanisch betätigbaren Verstellvorrichtung versehen.

Nicht nur bei einer Hangaufwärts-Fahrt, sondern auch in ebenem Gelände bewirkt ein um ca. 15° nach hinten und nach oben angestellter zweiter Siebabschnitt eine verbesserte Abscheidung der Körner, da diese aufgrund der Schwerkraft eine längere Zeit als sonst benötigen, um das Obersieb zu passieren. Unterstützt durch den Gebläsewind gelingt so eine optimale Trennung von Körner und Spreu bei geringstem baulichen Aufwand, der nur eine sich entlang des hinteren Randes quer zur Förderrichtung des Gutes und in einer im wesentlichen waagrechten Ebene erstreckende Gelenkachse erfordert.

Im folgenden wird die Erfindung anhand der Zeichnung näher erläutert, in der ein vorteilhaftes Ausführungsbeispiel dargestellt ist. Es zeigen:

Fig. 1 eine Seitenansicht eines erfindungsgemäß ausgestalteten Obersiebes und

Fig. 2 eine Draufsicht auf das Obersieb.

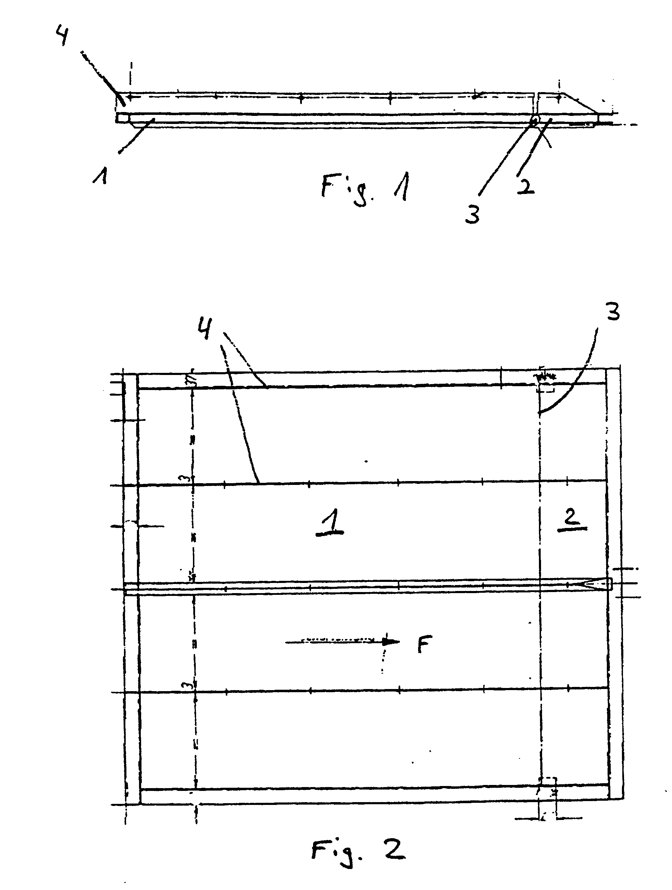

In den Figuren ist das Obersieb einer üblicherweise aus Obersieb, Untersieb und Gebläse bestehenden Reinigungsvorrichtung dargestellt, wobei das Obersieb aus einem ersten Siebabschnitt 1 besteht, an den sich ein (in Förderrichtung des Erntegutes gesehen) zweiter Siebabschnitt 2 anschließt. Der zweite Siebabschnitt 2 ist nun über eine Gelenkachse 3 derart mit dem ersten Siebabschnitt 1 verbunden, daß er einen Winkel mit dem ersten Siebabschnitt einschließen kann. Dieser Anstellwinkel des zweiten Siebabschnitts 2 beträgt vorteilhafterweise 15°; zu diesem Zweck ist der zweite Siebabschnitt 2 mit einer nicht dargestellten elektrisch, hydraulisch oder auch mechanisch betätigbaren Verstellvorrichtung versehen. Die Gelenkachse 3 erstreckt sich entlang des hinteren Randes des ersten Siebabschnitts 1 in dessen Ebene, d. h., senkrecht zur Förderrichtung des Erntegutes (F) und in der Ebene der beiden Siebabschnitte.

Die Anstellung des zweiten Siebabschnittes 2 unter einen Winkel von z. B. 15° gegen die Ebene des ersten Siebabschnitts bewirkt einen gewissen Bremseffekt für die das Obersieb passierenden Körner, die so einer längeren Verweildauer unterworfen sind, bevor sie das Obersieb endgültig verlassen. Dadurch wird die Abscheidewirkung, verstärkt durch den Gebläsewind und eine ev. Oszillationsbewegung des Obersiebes erhöht.

Mit 4 sind mehrere Leitbleche bezeichnet, die eine gleichmäßige Beaufschlagung des Obersiebs mit Dreschgut ermöglichen.

## Ansprüche

1. Reinigungsvorrichtung für selbstfahrende Mähdrescher, die sich an die Drescheinrichtung anSchließt und die im wesentlichen aus einem Gebläse, einem Obersieb und einem Untersieb besteht, dadurch gekennzeichnet, daß das Obersieb aus einem ersten Siebabschnitt 1 besteht an das, in Förderrichtung F des Erntegutes gesehen, sich ein zweiter Siebabschnitt 2 anschließt, der um eine in der Siebebene senkrecht zur Förderrichtung liegende Drehachse 3 höhenverstellbar am ersten Siebabschnitt angelenkt ist.
2. Reinigungsvorrichtung nach Anspruch 1, dadurch gekennzeichnet, daß der zweite Siebabschnitt mit einer elektrisch, hydraulisch oder mechanisch betätigbaren Verstellvorrichtung versehen ist.
3. Reinigungsvorrichtung nach Ansprüchen 1 und 2, dadurch gekennzeichnet, daß der zweite Siebabschnitt in einem Winkelbereich zwischen 0 und 30° höhenverstellbar und in jeder Lage arretierbar ist.

4
1
3
2

Fig. 1

4
3
1
2
F

Fig. 2

Europäisches Patentamt

# EUROPÄISCHER RECHERCHENBERICHT

Nummer der Anmeldung

EP 90111182.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| X | DD - A - 13 648 (KASCHADT, KURT) * Seite 3, Zeilen 20ff; Fig. 1,2 * | 1 | A 01 D 41/12<br>A 01 F 12/44 |
| A | * Seite 3, Zeilen 42ff * | 2 | |
| A | * Insbesondere Fig. 1,2 * | 3 | |
| A | DE - A1 - 3 032 861 (HEUER, GÜNTHER) * Seite 6, Zeilen 8ff; Anspruch 3 * | 2 | |
| A | EP - A1 - 0 178 018 (SPERRY CORP.) * Spalte 6, Zeilen 11ff; Fig. 1,2 * | 2 | |

RECHERCHIERTE SACHGEBIETE (Int Cl 5)

A 01 D 41/00
A 01 F 12/00

Der vorliegende Recherchenbericht wurde für alle Patentansprüche erstellt.

| Recherchenort | Abschlußdatum der Recherche | Prüfer |
|---|---|---|
| WIEN | 07-11-1990 | SCHNEEMANN |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82